# FASCICULE DE BREVET EUROPEEN

(11) **EP 3 596 183 B1**
(45) Date de publication et mention de la délivrance du brevet: **21.07.2021**
(21) Numéro de dépôt: 18714565.1
(22) Date de dépôt: 13.03.2018
(51) Int. Cl.: C09J 175/04, C09J 183/04, C09J 11/06, C09D 5/34

(54) **COMPOSITION ADHÉSIVE DE MASTIC PLASTIFIÉE SANS PHTALATE**
PLASTIFIZIERTE MASTIXKLEBSTOFFZUSAMMENSETZUNG OHNE PHTHALAT
PLASTICISED MASTIC ADHESIVE COMPOSITION WITHOUT PHTHALATE

(30) Priorité: 14.03.2017 FR 1752055
(43) Date de publication de la demande: 22.01.2020
(73) Titulaire: Bostik SA, 92700 Colombes (FR)
(72) Inventeur: SANZ, Federico, 60750 Choisy au Bac (FR)
(74) Mandataire: Arkema Patent
(86) Numéro de dépôt international: PCT/FR2018/050585
(87) Numéro de publication internationale: WO 2018/172652

(56) Documents cités:
- EP-A1- 0 890 594
- WO-A1-2012/026861
- FR-A1- 3 010 409

## Description

La présente invention a pour objet une composition adhésive de mastic comprenant un plastifiant, qui est avantageusement exempte de phtalate, ainsi qu'un article prêt à l'emploi la contenant.

Les mastics sont largement utilisés dans le domaine de la construction. Ils sont mis en œuvre pour assembler - par des joints de dilatation - des substrats, par exemple en béton ou en acier, et permettre grâce à leurs propriétés mécaniques, et en particulier élastiques, d'obtenir un joint stable aux variations dimensionnelles induites par les changements de température. Ils sont également utilisés pour le collage des revêtements de sol, notamment des parquets.

Généralement conditionnés, en vue d'une utilisation manuelle, dans des cartouches munies à une extrémité d'une canule, les mastics mono composants sont appliqués après avoir placé ladite cartouche dans un pistolet. La manipulation par l'opérateur de la gâchette du pistolet actionne un piston qui extrude le mastic au travers de la canule, et l'introduit dans l'interstice entre les 2 substrats à assembler, en vue de leur jointoiement.

Les compositions de mastics mono composants comprennent un prépolymère réticulable à l'humidité dont la structure chimique est dotée de groupes réactifs, généralement terminaux, isocyanate ou alkoxysilane. La réaction de ces groupes réactifs avec l'eau provenant de l'humidité de l'air ou du substrat (dénommée réaction de réticulation) permet, après l'introduction du mastic dans l'interstice entre les 2 substrats à assembler, la création d'un réseau polymérique tridimensionnel solide, qui confère au joint adhésif ainsi créé les propriétés mécaniques souhaitées. L'obtention effective de ces propriétés mécaniques est atteinte lorsque la totalité de la quantité de mastic introduite est réticulée, ce qui peut nécessiter plusieurs jours.

Dans le cas de mastics bi composants, une première composition, analogue à celle d'un mastic mono composant est combinée avec une deuxième composition qui comprend un agent de réticulation par exemple de type amine. Les 2 compositions sont mélangées au moment de l'application par un dispositif adapté, et également extrudées par l'opérateur au travers d'une canule dans l'interstice entre les 2 substrats à assembler.

Les compositions de mastic comprennent également un agent plastifiant dans le but d'augmenter la plasticité de la composition et de diminuer sa viscosité, en permettant ainsi, au moment de l'application du mastic conditionné dans une cartouche, son écoulement aisé par extrusion au niveau de la canule. Le plastifiant permet également, lors de l'application, d'améliorer la capacité du mastic à s'étaler ou à mouiller la surface des substrats à jointoyer.

Des esters de l'acide phtalique (ou phatlates) sont communément utilisés dans ce but. Ainsi, le brevet US 6,548,593 mentionne, en tant que référence (cf Tableau 2), un mastic mono composant à base d'un prépolymère réticulable à l'humidité comprenant en tant que plastifiant du diisodécylphtalate (connu également sous le sigle DIDP).

Or il est bien connu que les phtalates peuvent être dangereux pour l'homme, puisque certains d'entre eux ont été classés par l'Agence Européenne des Produits Chimiques comme substances cancérogènes, mutagènes ou reprotoxiques (CMR). Par conséquent, il est très souhaitable, dans un but de santé publique, de limiter l'exposition aux phtalates ou même de les substituer par des substances plus sûres, dans tous les produits industriels dans lesquels ils sont utilisés et auxquels le consommateur et/ou le fabricant sont susceptibles d'être exposés.

Par ailleurs, les plastifiants mis en œuvre dans les mastics peuvent présenter l'inconvénient de migrer (ou diffuser) hors du mastic réticulé, ce qui peut avoir plusieurs conséquences indésirables au niveau du joint adhésif : un aspect inesthétique lié à la présence de tâches à la surface des substrats au contact dudit joint, une perte d'élasticité risquant d'entraîner une rupture dans sa masse (ou rupture cohésive), ou encore une rupture à l'interface entre le joint et le substrat (rupture adhésive).

La présente invention a pour but de fournir une composition adhésive de mastic à base d'un plastifiant, qui est exempte de phtalate.

Un autre but de la présente invention est de fournir une telle composition de mastic qui comprend un plastifiant qui ne migre pas hors du mastic réticulé.

Un autre but de la présente invention est de proposer une telle composition de mastic résultant en un joint réticulé qui possède des propriétés mécaniques de même niveau que celles obtenues à partir de DIDP.

Un autre but de la présente invention est de proposer une composition de mastic, notamment mono composant, conduisant à un joint réticulé qui présente des propriétés mécaniques améliorées par rapport à celles obtenues à partir de DIDP, notamment en termes d'élasticité.

Il a à présent été trouvé que ces buts peuvent être atteints, en totalité ou en partie, au moyen de la composition adhésive de mastic telle que définie ci-après.

La présente invention concerne donc en premier lieu une composition adhésive de mastic selon la revendication 1.

Il a été trouvé que l'ester de formule (I) telle que définie dans la revendication 1 agit comme un plastifiant dans ladite composition, et permet notamment de conserver, par rapport au DIDP, l'aptitude dudit mastic à être extrudé de la cartouche d'application, sans entraîner l'inconvénient de la présence de phtalates dans ladite composition. Ledit ester ne donne pas lieu, en outre, à diffusion (ou migration) hors du mastic réticulé, et permet de plus l'obtention d'un joint adhésif réticulé qui présente les propriétés mécaniques requises, et même améliorées.

L'ester de formule générale (I) est obtenu par réaction d'un acide monocarboxylique avec un polyol, qui est :
- le pentaérythritol, de formule : 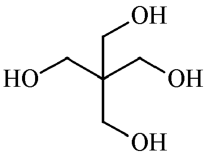 lorsque R⁴ représente un radical : -CH₂-R⁵ dans lequel R⁵ est identique à R¹, R² et R³.

L'acide butyrique (également dénommé acide n-butanoïque) ou l'acide valérique (également dénommé acide n-pentanoïque) sont mis en œuvre de façon préférée. Il est fait référence à la demande WO 2012/026861 pour de plus amples détails concernant la préparation de l'ester de formule (I).

Un composé ester particulièrement préféré est le tétravalérate de pentaérythritol, répondant à la formule (I) dans laquelle R¹, R², R³ et R⁴ représentent chacun le radical :

-O-C(O)-nC₄H₉

et qui est commercialisé sous la marque Pevalen™ par la société Perstorp.

Selon un mode de réalisation préféré de l'invention, la composition adhésive de mastic comprend de 5 à 35% en poids, de préférence de 15 à 30% en poids, sur la base du poids de ladite composition, de l'ester de formule (I).

La composition adhésive de mastic est une composition de mastic mono composant.

Le prépolymère réticulable à l'humidité compris dans la composition adhésive de mastic selon l'invention est un polyuréthane à groupes terminaux -NCO.

Les polyuréthanes à groupes terminaux -NCO sont préparés, de façon bien connue, en faisant réagir :
- un composé diisocyanate choisi par exemple parmi le diisocyanate de diphényle méthane (MDI), le toluène diisocyanate (TDI), l'isophorone diisocyanate (IPDI), le xylylène diisocyanate (XDI), l'hexaméthylène diisocyanate (HDI), avec
- un polyol ou composition de polyols possédant une masse molaire moyenne en nombre allant de 1000 à 18000 g/mol, de préférence un ou plusieurs polyéthers, et plus préférentiellement d'au moins un polyéther triol.

Les prépolymères polyuréthanes à groupes terminaux -NCO réagissent durant la réaction de réticulation avec l'humidité en formant des liaisons de type urée qui assurent la création d'un réseau polymérique tridimensionnel solide constitutif du joint adhésif.

La composition adhésive de mastic comprend généralement de 10 à 30% en poids, de préférence de 15 à 25% en poids, sur la base du poids de ladite composition, du prépolymère réticulable à l'humidité.

Selon un mode de réalisation, ladite composition adhésive de mastic comprend :
- de 10 à 30 % en poids du prépolymère réticulable à l'humidité,
- de 5 à 35% en poids de l'ester de formule (I) tel que défini ci-dessus, comme plastifiant,
- de 20 à 70 % en poids d'au moins une charge, et
- de 0,01 à 1 % en poids d'au moins un catalyseur de réticulation,
les pourcentages en poids étant exprimés par rapport au poids total de la composition adhésive de mastic.

Selon un mode de réalisation préféré, la composition adhésive de mastic peut comprendre, par exemple, par rapport au poids total de la composition adhésive de mastic :
- de 15 à 25 % en poids d'au moins un prépolymère réticulable à l'humidité,
- de 15 à 30% en poids de l'ester de formule (I),
- de 40 à 70 % en poids de charge, et
- de 0,01 à 1 % en poids de catalyseur de réticulation, les pourcentages en poids étant exprimés par rapport au poids total de la composition adhésive de mastic.

### Charge :

La (ou les) charge(s) utilisable(s) dans la composition adhésive de mastic selon l'invention peu(ven)t être choisie(s) parmi les charges minérales et les mélanges de charges organiques et de charges minérales.

A titre d'exemple de charge(s) minérale(s) utilisable(s), on peut utiliser n'importe quelle(s) charge(s) minérale(s) habituellement utilisée(s) dans le domaine des compositions de mastic. Ces charges se présentent sous la forme de particules de géométrie diverse. Elles peuvent être par exemples sphériques, fibreuses, ou présenter une forme irrégulière.

De préférence, on utilise de l'argile, du quartz, des charges carbonatées.

Plus préférentiellement, on utilise des charges carbonatées, telles que les carbonates de métaux alcalin ou alcalino-terreux, et plus préférentiellement le carbonate de calcium ou la craie.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La quantité de charge minérale pouvant être utilisée peut notamment varier de 20 à 65% en poids, de préférence de 20 à 50% en poids, et plus préférentiellement de 25 à 40% en poids du poids de la composition adhésive de mastic selon l'invention.

A titre d'exemple de charge(s) organique(s) utilisable(s), on peut utiliser n'importe quelle(s) charge(s) organique(s) et notamment polymérique(s) habituellement utilisée(s) dans le domaine des compositions de mastic

On peut utiliser par exemple du polychlorure de vinyle (PVC), des polyoléfines, du caoutchouc, de l'éthylène vinyl acétate (EVA), des fibres aramides telles que le Kevlar®.

On peut utiliser également des microsphères creuses en polymère thermoplastique expansibles ou non expansibles. On peut notamment citer des microsphères creuses en chlorure de vinylidène/acrylonitrile.

De préférence, on utilise du PVC.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive de mastic selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

### Catalyseur de réticulation :

A titre de catalyseur(s) de réticulation utilisable(s) dans la composition adhésive de mastic selon l'invention, on peut utiliser n'importe quel catalyseur(s) connu(s) par l'homme du métier pour catalyser la réticulation du polyuréthane à terminaisons NCO ou du prépolymère à groupes terminaux alkoxysilyl, en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

On peut utiliser par exemple un ou plusieurs catalyseurs de réticulation choisis parmi le dilaurate de dioctyl d'étain (DOTL), les catalyseurs à base de bismuth, ou encore les catalyseurs aminés tertiaires tels que :
- le 1,8-diazabicyclo[5.4.0]undec-7-ène (DBU) : 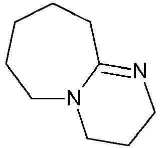
- le 1,5-diazabicyclo[4.3.0]non-5-ène (DBN) : 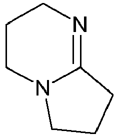
- l'éther diéthylique-2,2'-morpholine (DMDEE) : 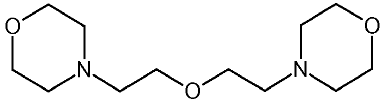
- le 1,4-diazabicyclo[2.2.2]octane (DABCO) :

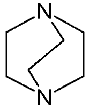

Ces catalyseurs de réticulation présentent l'avantage de ne pas être cancérogènes, mutagènes et reprotoxiques (CMR).

De préférence, la quantité de catalyseur de réticulation utilisable va de 0,05 à 0,5% en poids par rapport au poids de la composition adhésive, de mastic et/ou de revêtement de surface selon l'invention.

### Agent anti-coulure :

La composition adhésive de mastic selon l'invention peut comprendre également un agent anti-coulure, dans une quantité généralement comprise entre 5 et 25 % en poids/poids.

Un tel agent permet avantageusement, lorsque le mastic est utilisé pour jointoyer 2 substrats dont l'interstice est situé dans un plan vertical, de prévenir la coulure (qualifiée encore de fluage), sous l'effet de la gravité, du mastic fraîchement introduit par l'opérateur et non encore réticulé en surface. Un tel fluage (également désigné par les termes anglais de "sagging" ou "slump") doit être évité car il conduit, après achèvement complet de la réaction de réticulation, à un joint présentant un défaut de planéité et d'homogénéité dimensionnelle nuisant gravement à ses propriétés mécaniques.

Selon une variante préférée, l'agent anti-coulure mis en œuvre est une composition thixotrope comprenant, sur la base du poids total de ladite composition :
- de 10 à 40 % en poids d'une bis-urée obtenue par réaction d'une amine aliphatique primaire avec un diisocyanate de masse molaire inférieure à 500 g/mole, et
- de 60 à 90 % en poids de l'ester de formule (I) tel que défini précédemment.

Selon un mode de réalisation, l'agent anti-coulure mis en œuvre est une composition thixotrope constituée, sur la base du poids total de ladite composition :
- de 10 à 40 % en poids de ladite bis-urée, et
- de 60 à 90 % en poids de l'ester de formule (I).

La mise en œuvre d'une bis-urée obtenue par réaction de la n-butylamine avec le 4,4'-diisocyanate de diphénylméthylène (ou 4,4'-MDI) est particulièrement avantageuse.

La composition adhésive de mastic selon l'invention peut comprendre encore au moins un adjuvant choisi parmi les promoteurs d'adhérence tels que les époxysilanes, les stabilisants UV (ou anti-oxydants), les pigments, les colorants, et leur mélange. Lorsque ces adjuvants sont présents dans la composition, la somme totale de leur teneur est de préférence inférieure ou égale à 15% en poids par rapport au poids total de la composition adhésive de mastic selon l'invention.

La composition adhésive de mastic selon l'invention est de préférence stockée dans un environnement anhydre, par exemple dans un conditionnement hermétique où la composition adhésive de mastic se trouve à l'abri de l'humidité et de préférence à l'abri de la lumière.

La présente invention concerne également un article ou packaging, prêt à l'emploi, comprenant la composition adhésive de mastic selon l'invention dans un conditionnement hermétique à l'abri de l'air, en particulier à l'abri de l'humidité ambiante. De préférence, le conditionnement hermétique permet également de protéger la composition de la lumière. Par exemple, le conditionnement hermétique peut être un sac d'aluminium ou une cartouche d'aluminium munie d'un opercule.

Les exemples suivants sont donnés à titre purement illustratif de l'invention et ne sauraient être interprétés pour en limiter la portée.

### Exemple A (référence) : composition thixotrope à effet anti-coulure constituée d'une suspension de 23,3 % poids/poids de bis-urée dans le DIDP

On prépare tout d'abord une solution A de 17,17 % poids/poids de n-Butylamine dans 82,83 % poids/poids de DIDP, et une solution B de 29,46 % poids/poids de 4,4'-MDI dans 70,34 % poids/poids de DIDP. Les 2 solutions A et B sont chauffées à 100°C, puis introduites, chacune sous une pression de 100 bar, dans un réacteur, dans lequel elles sont pulvérisées en continu l'une sur l'autre dans un ratio A/B = 50,1 / 49,9 en poids, correspondant à un rapport molaire n-Butylamine/ MDI égal à 2. La réaction est immédiate et la température du réacteur atteint 140°C en fin de fabrication.

En sortie de réacteur, on obtient une dispersion stable de 23,3 % poids/poids dans le DIDP d'une bis-urée, de formule :

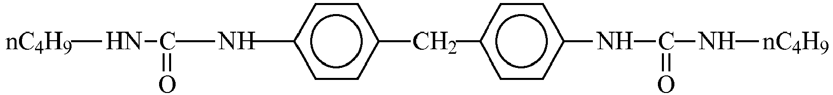

La viscosité Brookfield de la suspension mesurée à 23°C est de 15 Pa.s.

### Exemple B (référence) : composition adhésive de mastic à base de prépolymère polyuréthane à groupes terminaux -NCO comprenant comme plastifiant du DIDP et comme agent anti-coulure la composition thixotrope de l'exemple A :

On prépare, par simple mélange des ingrédients, la composition de mastic suivante dans laquelle les pourcentages sont des pourcentages poids/poids :
- 17 % de polyuréthane à groupements terminaux -NCO obtenu par réaction d'un mélange de 80% en poids de tolylène-2,4-diisocyanate et 20% en poids de tolylène-2,6-diioscyanate avec un mélange d'un polyéther diol de masse molaire 2000 g/mole et de polyéther triol de masse molaire 4200 g/mole.
- 25 % de charge carbonatée,
- 20 % en poids de PVC,
- 15 % en poids de la composition thixotrope de l'exemple A
- 10 % en poids de DIDP en tant que plastifiant
- 8 % en poids de xylène
- 5 % en poids d'autres additifs incluant le catalyseur de réticulation.

Le polyuréthane a été introduit dans la composition sous la forme d'une solution dans le xylène.

La composition de mastic obtenue est conditionnée dans une cartouche en aluminium, munie d'une canule, en vue de son application au moyen d'un pistolet pour les tests décrits ci-après.

### B.1. Test de la migration du plastifiant :

Ce test est un bon indicateur de la migration du plastifiant hors du mastic réticulé.

On dépose, au moyen de la cartouche contenant la composition de l'exemple B, une masse de 1 g de mastic, sous la forme approximative d'une sphère, au centre d'une 1^{ère} plaque de verre carrée de 5 cm de côté, qui a été préalablement placée horizontalement.

On applique ensuite fortement, sur ladite masse de mastic et au moyen d'une pression manuelle, une 2^{ème} plaque de verre identique à la 1^{ère}, de manière à superposer les 2 plaques et à étaler ainsi le mastic sous la forme approximative d'un disque d'environ 4,5 cm de diamètre.

On observe alors, à travers la plaque de verre supérieure, l'apparition d'un liquide transparent exudé par le disque comprimé de mastic, sous la forme d'un anneau entourant ledit disque, de rayon annulaire compris entre 1 et 2 mm.

### B.2. Test de l'écoulement du mastic non réticulé après extrusion :

Ce test a pour but d'apprécier l'aptitude à l'extrusion, au travers de la canule, du mastic conditionné en cartouche, sous l'effet de la pression exercée par le piston qui est solidaire de la gâchette du pistolet actionnée par l'opérateur.

On extrude dans ce but le mastic sous pression d'air au travers d'une buse calibrée et l'on mesure la masse débitée durant une minute.

Le mastic à tester est placé dans un godet de forme cylindrique (diamètre de 24 mm) terminé par une buse d'extrusion de diamètre 4 mm et de longueur 22,5 mm, et l'on exerce, au moyen d'un appareillage adapté, une pression de 3 bars sur le mastic, en opérant dans une enceinte climatisée à température ambiante (23°C).

Le débit mesuré est indiqué en g/minute dans le Tableau ci-dessous et correspond à un comportement du mastic parfaitement conforme.

### B.3. Test des propriétés de résistance à la traction d'un joint adhésif constitué par le mastic réticulé et unissant 2 substrats

Ce test est réalisé pour un joint adhésif unissant 2 substrats en béton ainsi que pour un joint adhésif unissant 2 substrats en aluminium.

Les 2 substrats de béton destinés à être jointoyés sont 2 substrats de forme parallélépipédique identiques, ayant une longueur de 75 mm, une largeur de 12 mm et une hauteur de 6 mm, la face rectangulaire de chaque substrat destinée à être en contact avec le joint ayant 75 mm de long et 12 mm de hauteur.

Les 2 substrats en aluminium destinés à être jointoyés sont 2 substrats de forme parallélépipédique identiques, ayant une longueur de 75 mm, une largeur de 25 mm et une hauteur de 12 mm, les 2 faces rectangulaires destinées à être en contact avec le joint ayant 75 mm de long et 12 mm de hauteur.

### B.3.1. Préparation des spécimens de joints à tester :

Les joints de béton (ou d'aluminium) à tester sont préparés en utilisant le mastic de l'exemple B, de telle façon que le joint de mastic réticulé qui lie les 2 substrats est centré sur les faces rectangulaires correspondantes, et a une forme de parallélépipède de longueur 50 mm, de largeur 12 mm et de hauteur 12 mm.

Les détails concernant la forme des spécimens de joints adhésifs et leur préparation sont donnés dans la Norme Européenne EN 8339 (cf § 6 et 7). En particulier, le mastic de l'exemple 2 est réticulé par un séjour de 28 jours dans une étuve à 23°C et 50 % d'humidité relative (selon la méthode A indiquée dans la norme), suivi d'un cycle alternant séjours dans une étuve à 70°C et séjours dans l'eau à 23°C (selon la méthode B indiquée dans la norme).

### B.3.2. Essais de traction des joints:

Les spécimens de joints préparés selon B.3.1. sont étirés dans une machine de traction, dont la mâchoire mobile se déplace à une vitesse constante égale à 5,5 mm/minute. On enregistre la contrainte appliquée et l'allongement de l'éprouvette (exprimé en %) durant son étirement.

Le module 100%, correspondant à la contrainte (en MPa) enregistrée pour un allongement de 100% du joint, ainsi que l'allongement (en %) mesurés à la rupture du joint sont indiqués dans le tableau ci-après, pour chaque type de substrat : béton ou aluminium.

### B.4. Test de fluage :

Le degré de fluage (ou sagging ou slump) d'un mastic mis en œuvre dans un joint vertical est mesuré selon la norme ASTM D 2202.

On observe une absence de fluage du mastic, soit une distance mesurée sur l'échelle graduée du dispositif inférieure à 2,5 mm.

### Exemple C (référence) : composition thixotrope constituée d'une suspension de 23,3 % poids/poids de bis-urée dans le tétravalérate de pentaérythritol

On répète l'exemple A en remplaçant le DIDP par le tétravalérate de pentaérythritol.

On obtient une dispersion stable de 23,3 % poids/poids de la même bis-urée, dont la viscosité Brookfield mesurée à 23°C est de 16,7 Pa.s.

### Exemple 1 (selon l'invention) : composition adhésive de mastic à base de prépolymère polyuréthane à groupes terminaux -NCO comprenant comme plastifiant du tétravalérate de pentaérythritol et comme agent anti-coulure la composition thixotrope de l'exemple C :

On répète l'exemple B en remplaçant lors de la préparation du mastic :
- les 10 % de DIDP par 10 % de tétravalérate de pentaérythritol, et
- la composition thixotrope de l'exemple A par celle de l'exemple C.

Les résultats des tests sont indiqués dans le tableau ci-dessous.

| | Exemple B | Exemple 1 |
|---|---|---|
| Migration du plastifiant Rayon annulaire (en mm) | entre 1 et 2 | < 0,5 |
| Ecoulement après extrusion (en g/minute) | 69 | 69 |
| Module 100% (en MPa) substrat béton | 0,44 | 0,48 |
| Allongement à la rupture (en %) substrat béton | 480 | 563 |
| Module 100% (en MPa) substrat aluminium | 0,41 | 0,46 |
| Allongement à la rupture (en %) substrat aluminium | 213 | 387 |
| Distance de fluage (en mm) selon ASTM D 2202 | < 2,5 | < 2,5 |

Ces résultats font apparaître pour le mastic de l'exemple 1 un comportement à l'extrusion lors de l'application en cartouche qui est identique à celui de l'exemple B.

Le module à 100% (qui indique la cohésion du joint adhésif) et l'allongement à la rupture (qui correspond à l'élasticité du joint adhésif) sont chacun améliorés pour l'exemple 1 selon l'invention par rapport à l'exemple B de référence, aussi bien pour des substrats en béton que pour des substrats en aluminium.

## Revendications

1. Composition adhésive de mastic mono composant comprenant au moins un prépolymère réticulable à l'humidité constitué d'un polyuréthane à groupes terminaux -NCO et, comme agent plastifiant, un composé ester de formule (I) : 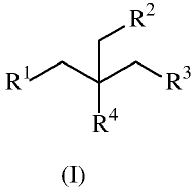 dans laquelle :
- R¹, R² et R³, sont identiques et représentent chacun un radical oxycarbonylalkyle ayant 4 ou 5 atomes de carbone; et
- R⁴ représente un radical : -CH₂-R⁵ dans lequel R⁵ est identique à R¹, R² et R³.

2. Composition adhésive de mastic selon la revendication 1, **caractérisée en ce que** le composé ester de formule (I) est le tétravalérate de pentaérythritol.

3. Composition adhésive de mastic selon l'une des revendications 1 à 2, **caractérisée en ce qu'**elle comprend de 5 à 35% en poids, sur la base du poids de ladite composition, de l'ester de formule (I).

4. Composition adhésive de mastic selon l'une des revendications 1 à 3, **caractérisée en ce qu'**elle comprend de 15 à 30% en poids, sur la base du poids de ladite composition, de l'ester de formule (I).

5. Composition adhésive de mastic selon l'une des revendications 1 à 4, **caractérisée en ce qu'**elle comprend :
- de 10 à 30 % en poids du prépolymère réticulable à l'humidité,
- de 5 à 35% en poids de l'ester de formule (I),
- de 20 à 70 % en poids d'au moins une charge, et
- de 0,01 à 1 % en poids d'au moins un catalyseur de réticulation,
les pourcentages en poids étant exprimés par rapport au poids total de la composition adhésive de mastic.

6. Composition adhésive de mastic selon l'une des revendications 1 à 5, **caractérisée en ce qu'**elle comprend :
- de 15 à 25 % en poids du prépolymère réticulable à l'humidité,
- de 15 à 30% en poids de l'ester de formule (I),
- de 40 à 70 % en poids de charge, et
- de 0,01 à 1 % en poids de catalyseur de réticulation, les pourcentages en poids étant exprimés par rapport au poids total de la composition adhésive de mastic.

7. Article prêt à l'emploi, comprenant la composition adhésive de mastic telle que définie dans l'une des revendications 1 à 6 dans un conditionnement hermétique à l'abri de l'air.

8. Article selon la revendication 7, **caractérisé en ce que** le conditionnement est une cartouche d'aluminium munie d'un opercule.

## Patentansprüche

1. Haftende Einkomponenten-Kittzusammensetzung, die mindestens ein Präpolymer, das mit Feuchtigkeit vernetzbar ist und aus einem Polyurethan mit den Endgruppen -NCO besteht, und als Weichmacher eine Esterverbindung mit der Formel (I) umfasst: 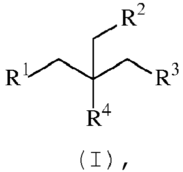 in der:
- R¹, R² und R³ identisch sind und jeweils einen Oxycarbonylalkylrest mit 4 oder 5 Kohlenstoffatomen darstellen; und
- R⁴ einen -CH₂-R⁵-Rest darstellt, in dem R⁵ mit R¹, R² und R³ identisch ist.

2. Haftende Kittzusammensetzung nach Anspruch 1, **dadurch gekennzeichnet, dass** die Esterverbindung mit der Formel (I) Pentaerythritoltetravalerat ist.

3. Haftende Kittzusammensetzung nach Anspruch 1 oder 2, **dadurch gekennzeichnet, dass** sie auf Basis des Gewichts der Zusammensetzung 5 bis 35 Gewichts-% von dem Ester mit der Formel (I) umfasst.

4. Haftende Kittzusammensetzung nach einem der Ansprüche 1 bis 3, **dadurch gekennzeichnet, dass** sie auf Basis des Gewichts der Zusammensetzung 15 bis 30 Gewichts-% von dem Ester mit der Formel (I) umfasst.

5. Haftende Kittzusammensetzung nach einem der Ansprüche 1 bis 4, **dadurch gekennzeichnet, dass** sie Folgendes umfasst:
- von 10 bis 30 Gewichts-% von dem mit Feuchtigkeit vernetzbaren Präpolymer,
- von 5 bis 35 Gewichts-% von dem Ester mit der Formel (I),
- von 20 bis 70 Gewichts-% von mindestens einem Füllstoff, und
- von 0,01 bis 1 Gewichts-% von mindestens einem Vernetzungskatalysator,
wobei die Massenanteile bezogen auf das Gesamtgewicht der haftenden Kittzusammensetzung ausgedrückt sind.

6. Haftende Kittzusammensetzung nach einem der Ansprüche 1 bis 5, **dadurch gekennzeichnet, dass** sie Folgendes umfasst:
- von 15 bis 25 Gewichts-% von dem mit Feuchtigkeit vernetzbaren Präpolymer,
- von 15 bis 30 Gewichts-% von dem Ester mit der Formel (I),
- von 40 bis 70 Gewichts-% von dem Füllstoff, und
- von 0,01 bis 1 Gewichts-% von dem Vernetzungskatalysator, wobei die Massenanteile bezogen auf das Gesamtgewicht der haftenden Kittzusammensetzung ausgedrückt sind.

7. Gebrauchsfertiger Artikel, der die haftende Kittzusammensetzung nach einem der Ansprüche 1 bis 6 in einer luftdicht verschlossenen Verpackung umfasst.

8. Artikel nach Anspruch 7, **dadurch gekennzeichnet, dass** die Verpackung eine Aluminiumkartusche ist, die mit einem Deckel versehen ist.

## Claims

1. Single-component adhesive sealant composition comprising at least one moisture-crosslinkable prepolymer consisting of a polyurethane having -NCO end groups and as plasticizer an ester compound of formula (I): 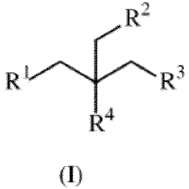 in which:
- R¹, R² and R³ are identical and each represent an oxycarbonylalkyl radical having 4 or 5 carbon atoms; and
- R⁴ represents a radical: -CH₂-R⁵ in which R⁵ is identical to R¹, R² and R³.

2. Adhesive sealant composition according to Claim 1, **characterized in that** the ester compound of formula (I) is pentaerythritol tetravalerate.

3. Adhesive sealant composition according to either of Claims 1 to 2, **characterized in that** it comprises from 5% to 35% by weight, based on the weight of said composition, of the ester of formula (I).

4. Adhesive sealant composition according to any of Claims 1 to 3, **characterized in that** it comprises from 15% to 30% by weight, based on the weight of said composition, of the ester of formula (I).

5. Adhesive sealant composition according to any of Claims 1 to 4, **characterized in that** it comprises:
- from 10% to 30% by weight of the moisture-crosslinkable prepolymer,
- from 5% to 35% by weight of the ester of formula (I) ,
- from 20% to 70% by weight of at least one filler, and
- from 0.01% to 1% by weight of at least one crosslinking catalyst,
the percentages by weight being expressed relative to the total weight of the adhesive sealant composition.

6. Adhesive sealant composition according to any of Claims 1 to 5, **characterized in that** it comprises:
- from 15% to 25% by weight of the moisture-crosslinkable prepolymer,
- from 15% to 30% by weight of the ester of formula (I) ,
- from 40% to 70% by weight of filler, and
- from 0.01% to 1% by weight of crosslinking catalyst, the percentages by weight being expressed relative to the total weight of the adhesive sealant composition.

7. Ready-to-use article comprising the adhesive sealant composition as defined in any of Claims 1 to 6, in an airtight package.

8. Article according to Claim 7, **characterized in that** the package is an aluminium cartridge fitted with a cap.
